# EUROPÄISCHE PATENTANMELDUNG

(11) **EP 1 103 521 A1**
(43) Veröffentlichungstag der Anmeldung: **30.05.2001**
(21) Anmeldenummer: 00124047.2
(22) Anmeldetag: 04.11.2000
(51) Int. Cl.: C01B 17/38

(54) **Verfahren zur Herstellung von wasserfreiem, hochreinem Natriumsulfid**

(30) Priorität: 24.11.1999 DE 19956377
(71) Anmelder: Degussa AG, 40474 Düsseldorf (DE)
(72) Erfinder: Hahn, Henrik, Dr., 60385 Frankfurt (DE); Kress, Peter, 63579 Freigericht (DE)

(57) **Zusammenfassung**

Verfahren zur Herstellung von wasserfreiem, hochreinem Natriumsulfid mit einem Gehalt von mindestens 98 Gew.-% Na₂S durch Trocknung von wasserhaltigem Natriumsulfid, wobei man das wasserhaltige Natriumsulfid mit nicht wassermischbarem, organischem Lösungsmittel auf 10° bis 20°C unterhalb des Schmelzpunktes des wasserhaltigen Natriumsulfides erwärmt, stufenweise hochheizt mit Temperaturstufen von 1° bis 10°C und Haltezeiten von 5 bis 15 Minuten auf 10° bis 20°C oberhalb des Schmelzpunktes des wasserhaltigen Natriumsulfids, erwärmt bis zur Siedetemperatur des Wasser-Lösungsmittelgemisches und durch azeotrope Destillation im Vakuum oder unter Druck das Kristallwasser abdestilliert.

## Beschreibung

Die Erfindung betrifft die Herstellung von wasserfreiem, hochreinem Natriumsulfid durch Trocknung von wasserhaltigem Natriumsulfid.

Als auf dem Markt verfügbares Produkt findet man ein wasserhaltiges Natriumsulfid mit einem Na₂S-Anteil von insbesondere 60 bis 62 %. Nach stöchiometrischer Berechnung entspricht dies in etwa dem Na₂S^{.}3H₂O.

Durch das Einleiten von Schwefelwasserstoff in konzentrierte Natronlauge entsteht bei Temperaturen über 100 ° C eine Natriumsulfidhydratschmelze mit einem Gehalt von ca. 60 % bis 62 % Na₂S.
Diese wird auf ein Kühlband aufgetragen, auf dem sie erstarrt (T <90 ° C). Nach der Zerkleinerung erhält man im allgemeinen einen schuppenförmiges Produkt, das dann marktüblich verfügbar ist.

Aus dem Stand der Technik sind bereits Verfahren bekannt, um aus Na₂S^{.}9H₂O, Na₂S^{.}6H₂O oder Na₂S^{.}5H₂O ein wasserfreies Natriumsulfid herzustellen.
Gemäß EP-B-0345 136 stellt man in der ersten

Dehydratisierungsstufe das Monohydrat her. Für die Entwässerung benötigt man eine Zeit von 2 Stunden und mehr.

Das restliche, im Monohydrat enthaltene Wasser entfernt man dann bei einer Temperatur von 90 bis 200 ° C und einem reduzierten Druck von ca. 2,66 kPa (20 Torr) bis 66,5 kPa (500 Torr).

Ein ähnliches, zweistufiges Verfahren zur Herstellung von kristallinem wasserfreiem Natriumsulfid wird in der EP-B Bei dem Verfahren, beschrieben in EP 0924165, wird zur Herstellung von wasserfreiem Natriumsulfid wasserhaltiges Natriumsulfid mit einem Wassergehalt von 35 bis 45 Gew.% unter reduziertem Druck erhitzt, wobei man
unter Mischen durch eine Vorrichtung fördert, in der die Temperatur des eingespeisten Na2S-Hydrats von ca. 20 ° C am Ort der Feststoffeinspeisung auf ≥180 ° C am Feststoffauslaß stetig ansteigt, und gleichzeitig ein Unterdruck von <20 Torr eingehalten wird.

Bei dem bekannten Verfahren aus EP 0795 558 wird zur Herstellung von polysulfidischen Silylethern wasserhaltige Metallsulfide und/oder Metallpolysulfide zunächst in Gegenwart eines nicht wassermischbaren, organischen Lösungsmittels und in Gegenwart eines Emulgators bei Temperaturen von 90 bis 220°C, gegebenenfalls im Vakuum oder unter Druck, entwässert, anschließend bei Einsatz von Metallsulfiden diese mit Schwefel zu Metallpolysulfiden umsetzt.

Bei einem weiteren bekannten Verfahren, beschrieben in JP 7228588, wird zur Herstellung von schwefelhaltigen organischen Siliciumverbindungen wasserfreies Natriumsulfid hergestellt durch Erwärmen von wasserhaltigem Natriumsulfid unter verringertem Druck oder indem man wasserhaltiges Natriumsulfid in einem polaren Lösungsmittel löst und anschließend dieses polare Lösungsmittel abdestilliert.

Der Nachteil dieser bekannten Verfahren besteht darin, daß man die vollständige Umsetzung zum Beispiel zum Monohydrat in der ersten Stufe abwarten muß (EP-B - 0345 136), bevor man diese Verbindung der zweiten Temperaturstufe zuführen kann, die Brüdengeschwindigkeit sehr hoch ist (EP 0924165), beziehungsweise ein Emulgator benötigt wird (EP 795 558).

Aufgabe der Erfindung ist es, ein Verfahren bereitzustellen, mit dessen Hilfe man ein wasserfreies, hochreines Natriumsulfid erhält.

Gegenstand der Erfindung ist ein Verfahren zur Herstellung von wasserfreiem, hochreinem Natriumsulfid mit einem Gehalt von mindestens 98 Gew.-% Na₂S, vorzugsweise mindestens 99 Gew.-% Na₂S, durch Trocknung von wasserhaltigem Natriumsulfid, dadurch gekennzeichnet, daß man das wasserhaltige Natriumsulfid mit nicht wassermischbarem organischem Lösungsmittel auf 10° bis 20°C unterhalb des Schmelzpunktes des wasserhaltigen Natriumsulfides erwärmt, stufenweise hochheizt mit Temperaturstufen von 1° bis 10°C, vorzugsweise 3° bis 8°C, und Haltezeiten von 5 bis 15 Minuten, vorzugsweise 10 bis 15 Minuten, auf 10° bis 20°C oberhalb des Schmelzpunktes des wasserhaltigen Natriumsulfids, erwärmt bis zur Siedetemperatur des Wasser-Lösungsmittelgemisches und durch azeotrope Destillation im Vakuum oder unter Druck das Kristallwasser abdestilliert.

Auf einen Emulgator kann verzichtet werden. Die Emulgatoren verfügen über funktionelle Gruppen, die bei weiteren Reaktionen des wasserfreien Natriumsulfids zu unerwünschten Nebenreaktionen führen können. Durch die gezielte Temperaturführung kann das Entstehen von Anbackungen an der Gefäßwand effektiv verhindert werden.

Als nicht wassermischbares, organisches Lösungsmittel kann Oktan, Toluol, o-Xylol, m-Xylol oder p-Xylol verwendet werden.

Die Temperaturführung hängt von der verwendeten Apparatur, insbesondere der Art der Begleittemperierung und der Rührgeometrie ab.

Die Trocknung kann unter Rühren erfolgen. Als Rührer können alle bekannten Rührer, vorzugsweise Propellerrührer, Schrägblattrührer oder Trapezrührer, verwendet werden.

Die Trocknung kann unter Überlagerung mit Inertgas, vorzugsweise Stickstoff, erfolgen.

Das Verfahren kann sowohl diskontinuierlich, als auch kontinuierlich durchgeführt werden.

Bevorzugt kann man das wasserhaltige Na2S in Schuppen-, Plättchen- oder Flakesform mit einer Kantenlänge von 5 bis 8 mm einsetzen.

Nach der Entwässerung kann die Folgeumsetzung zu organofunktionalisierten Silanen mit dem Lösungsmittelfeuchten, wasserfreien Natriumsulfid im selben Rührgefäß nach Ablassen des Lösungsmittels erfolgen.

Mittels herkömmlicher Kontakttrocknung kann ein rieselfähiges, staubfreies Natriumsulfid erhalten werden, das gute Lagerungs- und Transporteigenschaften aufweist.

### Beispiel 1

### Entwässerung:

126 g Na₂S^{.}3H₂O und 350 ml p-Xylol werden im Ölbadtemperierten 1 1-Doppelmantel-Rührgefäß mit Azeotrop-Abscheider und Propellerrührer zunächst in 30 Minuten auf eine Sumpftemperatur von 65°C geheizt. Das Aufschmelzen des Hydrates erfolgt in 5°C-Schritten bei einer Haltezeit von 15 Minuten. Bei einer Sumpftemperatur von 132,1°C beginnt das Kristallwasser azeotrop abzudestillieren. Nach weiteren 140 Minuten sind 48 ml H20 entsprechend 3 Mol abgeschieden. Es liegt eine gleichmäßige helle Dispersion vor. Nach Ablassen des Lösungsmittels läßt sich an der Gefäßwandung haftendes entwässertes Natriumsulfid problemlos mit Lösungsmittel ablösen. Der Wirkstoffgehalt des Xylolfeuchten Na2S wird per Jodometrie zu 76,3 Gew.-% bestimmt.

### Folgeumsetzung

### Herstellung von Si 266

30 g entwässertes Xylol-feuchtes Na2S, 122,8 g saures ClPTES und 9,4 g S werden in 122 ml Ethanol zu Si 266 umgesetzt. Die Herstellung von Si 266 ist in DE 197 342 95, Beispiel 1b, beschrieben. Mittels NMR-Spektroskopie wird ein vollständiger C1PTES-Umsatz nachgewiesen, was auf eine vollständige Entwässerung des Na₂S hinweist.

### Beispiel 2

### Entwässerung:

126 g Na₂S^{.}3H₂O und 350 ml p-Xylol werden im Ölbadtemperierten 11-Doppelmantel-Rührgefäß mit Azeotrop-Abscheider und Schrägblattrührer zunächst in 30 Minuten auf eine Sumpftemperatur von 63°C geheizt. Das Aufschmelzen des Hydrates erfolgt in 5°C-Schritten bei einer Haltezeit von 15 Minuten. Bei einer Sumpftemperatur von 124,5°C beginnt das Kristallwasser azeotrop abzudestillieren. Nach weiteren 130 Minuten sind 48 ml H₂O entsprechend 3 Mol abgeschieden. Es liegt eine gleichmäßige helle Dispersion vor. Es werden mehr Ablagerungen als beim Einsatz des Propellerrührers beobachtet. Diese lassen sich nach Ablassen des Lösungsmittels mit Lösungsmittel ablösen.

### Beispiel 3

### Entwässerung

126,1 g Na₂S^{.}H₂O und 700 ml p-Xylol werden im Ölbadtemperierten 11-Doppelmantel-Rührgefäß mit Azeotrop-Abscheider und Trapezrührer zunächst in 30 Minuten auf eine Sumpftemperatur von 62,7°C geheizt. Das Aufschmelzen des Hydrates erfolgt in 5°C-Schritten bei einer Haltezeit von 15 Minuten. Bei einer Sumpftemperatur von 130,9°C beginnt das Kristallwasser azeotrop abzudestillieren. Nach weiteren 105 Minuten sind 49 ml H₂O entsprechend 3 Mol abgeschieden. Es liegt eine gleichmäßige helle Dispersion vor. Nach Ablassen des Lösungsmittels läßt sich an der Gefäßwandung haftendes entwässertes Natriumsulfid problemlos mit Lösungsmittel ablösen.

### Vergleichsbeispiel:

### Entwässerung:

Gemäß Beispiel 1 von EP 0 795 558 wird Natriumsulfid getrocknet. Der größte Teil des entwässerten Natriumsulfides lagert sich an der Gefäßwandung ab.

### Folgeumsetzung

Eine Folgeumsetzung analog Beispiel 1 ergibt eine unvollständige Umsetzung von C1PTES.

### Herstellung von Si 266

Das Endprodukt enthält 4,5% nicht umgesetztes C1PTES.

## Patentansprüche

1. Verfahren zur Herstellung von wasserfreiem, hochreinem Natriumsulfid mit einem Gehalt von mindestens 98 Gew.-% Na₂S durch Trocknung von wasserhaltigem Natriumsulfid
dadurch gekennzeichnet,
daß man das wasserhaltige Natriumsulfid mit nicht wassermischbarem, organischem Lösungsmittel auf 10° bis 20°C unterhalb des Schmelzpunktes des wasserhaltigen Natriumsulfides erwärmt, stufenweise hochheizt mit Temperaturstufen von 1° bis 10°C und Haltezeiten von 5 bis 15 Minuten auf 10° bis 20°C oberhalb des Schmelzpunktes des wasserhaltigen Natriumsulfids, erwärmt bis zur Siedetemperatur des Wasser-Lösungsmittelgemisches und durch azeotrope Destillation im Vakuum oder unter Druck das Kristallwasser abdestilliert.

2. Verfahren nach Anspruch 1,
dadurch gekennzeichnet,
daß man als nicht wassermischbares, organisches Lösungsmittel Xylol verwendet.

3. Verfahren nach Anspruch 1,
dadurch gekennzeichnet,
daß man emulgatorfrei trocknet.
